# EUROPEAN PATENT SPECIFICATION

(11) **EP 3 337 123 B1**
(45) Date of publication and mention of the grant of the patent: **16.06.2021**
(21) Application number: 16834601.3
(22) Date of filing: 04.08.2016
(51) Int. Cl.: H04L 29/06, H04L 29/12

(54) **NETWORK ATTACK PREVENTION METHOD, APPARATUS AND SYSTEM**
VERFAHREN, VORRICHTUNG UND SYSTEM ZUR VERMEIDUNG VON NETZWERKANGRIFFEN
PROCÉDÉ, APPAREIL ET SYSTÈME DE PRÉVENTION D'ATTAQUE DE RÉSEAU

(30) Priority: 13.08.2015 CN 201510497226
(43) Date of publication of application: 20.06.2018
(73) Proprietor: Alibaba Group Holding Limited, Grand Cayman (KY)
(72) Inventor: XIAO, Hongliang, Hangzhou Zhejiang 311121 (CN); ZHANG, Dacheng, Hangzhou Zhejiang 311121 (CN)
(74) Representative: Barker Brettell LLP
(86) International application number: PCT/CN2016/093186
(87) International publication number: WO 2017/024977

(56) References cited:
- CN-A- 102 075 592
- CN-A- 103 391 272
- CN-A- 103 856 487
- CN-A- 104 125 242
- US-A1- 2013 232 574
- ANAGNOSTOPOULOS MARIOS ET AL: "DNS amplification attack revisited", COMPUTERS & SECURITY, vol. 39, 30 November 2013 (2013-11-30), - 30 November 2013 (2013-11-30), pages 475-485, XP028780864, ISSN: 0167-4048, DOI: 10.1016/J.COSE.2013.10.001
- FABRICE J RYBA ET AL: "Amplification and DRDoS Attack Defense -- A Survey and New Perspectives", ARXIV.ORG, CORNELL UNIVERSITY LIBRARY, 201 OLIN LIBRARY CORNELL UNIVERSITY ITHACA, NY 14853, 29 May 2015 (2015-05-29), XP080809563,
- CHANGHUA SUN ET AL: "Efficient and Low-Cost Hardware Defense Against DNS Amplification Attacks", 2008 IEEE GLOBAL TELECOMMUNICATIONS CONFERENCE : [IEEE GLOBECOM 2008] ; NEW ORLEANS, LOUISIANA, 30 NOVEMBER 2008 - 04 DECEMBER 2008, IEEE, PISCATAWAY, NJ, USA, 30 November 2008 (2008-11-30), pages 1-5, XP031370080, ISBN: 978-1-4244-2324-8

## Description

### Technical Field

The present invention relates to the field of networking technologies, and particularly to network attack prevention methods, apparatuses and systems.

### Background

Along with the continuous development of network technologies, the number of network attacks in the network field has increased. Currently, a distributed denial of service (DDoS) has become a relatively severe attack trick among a number of network attacks. DNS response attacks in DDoS have become a mainstream attack type. The DNS response attacks may also be called domain name system (DNS) response attacks.

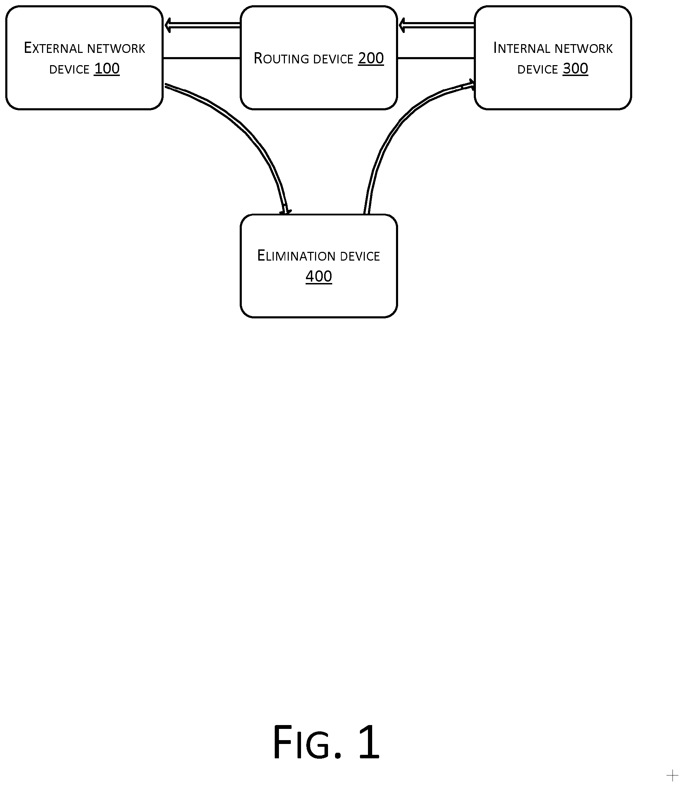

In order to prevent DNS response attacks, an elimination device is added into an original system to form a prevention system. FIG. 1 is a schematic structural diagram of a prevention system. In the figure, a by-pass of an elimination device can be found to be deployed on one side of a router.

In a situation when a bypass of an elimination device is deployed, a source detection method can be used to eliminate invasive DNS response messages that are sent from external network devices to internal network devices. A specific process of eliminating may be to extract a source address and determine whether the source address is included in a dynamic white list after an elimination device receives a DNS response message sent from an external network device to an internal network device. If the source address is not included in the dynamic white list, a DNS request message is sent as a probe message to the external network device. If no DNS response message that is returned from the external network device is received, the external network device is determined to be a fake source, and the DNS response message is discarded. If a DNS response message returned from the external network device is received and a domain in the DNS response message satisfies a certain requirement, the external network device is determined to be a real source, and an IP address of the external network device is added into the dynamic white list. If the source address is included in the dynamic white list, the external network device is a real source, and the DNS response message is transmitted.

DNS response attacks can also be classified according to types of attack: a real source attack and a fake source attack. Since a dynamic white list only includes IP addresses of real sources, and does not include IP addresses of fake sources, the source detection method can only eliminate DNS response attacks initiated from the fake sources, and cannot eliminate DNS response attacks initiated from the real sources.

ANAGNOSTOPOULOS MARIOS ET AL, "DNS amplification attack revisited", COMPUTERS & SECURITY, (20131130), vol. 39, doi:10.1016/J.COSE.2013.10.001, ISSN 0167-4048, pages 475 - 485, discloses a DNSSEC-powered amplification attack that takes advantage of the vast number of DNS forwarders. Specifically, for augmenting the amplification factor, the attacker utilizes only those forwarders that support DNSSEC-related resource records and advertise a large DNS size packet.

Accordingly, a method for eliminating DNS response attacks initiated from the real sources is needed now, to reduce the impact on services and networks caused by DNS response attacks.

### Summary

The present application discloses network attack prevention method, apparatus and system to eliminate DNS response attacks initiated from real sources to reduce the impact on services and networks caused by the DNS response attacks. Aspects of the present application provide a method, an apparatus and one or more computer readable media as defined in the appended claims. Optional features are defined in the dependent claims.

In order to achieve the above goals, the present application discloses the following technical measures.

A network attack prevention method includes receiving a target DNS response message that is directed to an internal network device and sent from an external network device; determining whether the target DNS response message satisfies predetermined conditions under a circumstance that a dynamic white list includes a source address in the target DNS response message; and discarding the target DNS response message if the target DNS response message satisfies the predetermined conditions, wherein the predetermined conditions include at least a target domain in the target DNS response message being not included in a historical domain record, each historical domain name in the historical domain name record being extracted from historical DNS response messages sent by the external network device.

Preferably, the predetermined condition further include a time difference between a first sending time and a second sending time initiated by the external network device for the target domain name is less than a predetermined time difference, wherein the first sending time is a time of sending the target DNS response message, and the second sending time is a time of sending a most recent DNS response message that includes the target domain name prior to the first sending time.

Preferably, the method further includes transmitting the target DNS response message to the internal network device under a circumstance that the time difference is not less than the predetermined time difference.

Preferably, the method further includes storing the domain name and a sending time of the target DNS response message into the historical domain name record if the target domain name in the target DNS response message is not included in the historical domain name record.

Preferably, the method further includes calculating a ratio between a number of domain names having a hit rate greater than a predetermined number and a total number of domain names, wherein the historical domain name record includes all domain names and respective hit rates of the domain names in historical DNS response messages sent by the external network device, and the predetermined number is not less than a natural number of three; and deleting a source address of the external network device from the dynamic white list and adding the source address of the external network device into a dynamic black list if the ratio is greater than a predetermined ratio.

Preferably, a method of calculating a hit rate of each domain name in the historical domain name record includes finding a domain name in a DNS response message in the historical domain name record after receiving the DNS response message; and increasing a hit rate of the domain name by one, wherein an initial value of the hit rate of each domain name is zero.

Preferably, the predetermined conditions further include a total throughput value of a throughput value of the target DNS response message and a throughput value of the historical DNS response messages being greater than a predetermined throughput value, wherein the historical DNS response messages are all DNS response messages sent by the external network device before the target DNS response message is sent.

Preferably, the method further includes deleting the source address from the dynamic white list and adding the source address into a dynamic black list in response to the total throughput value is greater than the predetermined throughput value.

Preferably, a process of calculating the throughput value of the historical DNS response messages includes adding a throughput value of a DNS response message to the throughput value of the historical DNS response messages after the DNS response message is sent from the source address of the external network device, an initial value of the throughput value of the historical DNS response messages is zero.

Preferably, the method further include discarding the target DNS response message when the dynamic black list includes the source address in the target DNS response message.

A network attack prevention apparatus includes a receiving unit used for receiving a target DNS response message that is directed to an internal network device and sent from an external network device; a determination unit used for determining whether the target DNS response message satisfies predetermined conditions under a circumstance that a dynamic white list includes a source address in the target DNS response message; and a first discarding unit used for discarding the target DNS response message if the target DNS response message satisfies the predetermined conditions, wherein the predetermined conditions include at least a target domain in the target DNS response message being not included in a historical domain record, each historical domain name in the historical domain name record being extracted from historical DNS response messages sent by the external network device.

Preferably, the predetermined condition further include a time difference between a first sending time and a second sending time initiated by the external network device for the target domain name is less than a predetermined time difference, wherein the first sending time is a time of sending the target DNS response message, and the second sending time is a time of sending a most recent DNS response message that includes the target domain name prior to the first sending time.

Preferably, the apparatus further includes a transmission unit used for transmitting the target DNS response message to the internal network device when the time difference is not less than the predetermined time difference.

Preferably, the apparatus further includes a storage unit used for storing the domain name and a sending time of the target DNS response message into the historical domain name record if the target domain name in the target DNS response message is not included in the historical domain name record.

Preferably, the apparatus further includes a ratio calculation unit used for calculating a ratio between a number of domain names having a hit rate greater than a predetermined number and a total number of domain names, wherein the historical domain name record includes all domain names and respective hit rates of the domain names in historical DNS response messages sent by the external network device, and the predetermined number is not less than a natural number of three; a first deletion unit used for deleting a source address of the external network device from the dynamic white list if the ratio is greater than a predetermined ratio; and an first addition unit used for adding the source address of the external network device into a dynamic black list.

Preferably, the apparatus further includes a hit rate calculation unit used for finding a domain name in a DNS response message in the historical domain name record after receiving the DNS response message, and increasing a hit rate of the domain name by one, wherein an initial value of the hit rate of each domain name is zero.

Preferably, the predetermined conditions further include a total throughput value of a throughput value of the target DNS response message and a throughput value of historical DNS response messages being greater than a predetermined throughput value, wherein the historical DNS response messages are all DNS response messages sent by the external network device before the target DNS response message is sent.

Preferably, the apparatus further includes a second deletion unit used for deleting the source address from the dynamic white list when the total throughput value is greater than the predetermined throughput value; and a second addition unit used for adding the source address into a dynamic black list.

Preferably, an apparatus further includes a throughput calculation unit used for adding a throughput value of a DNS response message to the throughput value of the historical DNS response messages after the DNS response message is sent from the source address of the external network device, an initial value of the throughput value of the historical DNS response messages is zero.

Preferably, the apparatus further include a second discarding unit used for discarding the target DNS response message when the dynamic black list includes the source address in the target DNS response message.

A network attack prevention system includes an external network device, an elimination device, and an internal network device.

The external network device is used for sending a target DNS response message directed to the internal network device to the elimination device.

The elimination device is used for receiving the target DNS response message that is directed to the internal network device from the external network device; determining whether the target DNS response message satisfies predetermined conditions under a circumstance that a dynamic white list includes a source address in the target DNS response message; and discarding the target DNS response message if the target DNS response message satisfies the predetermined conditions, wherein the predetermined conditions include at least a target domain in the target DNS response message being not included in a historical domain record, each historical domain name in the historical domain name record being extracted from historical DNS response messages sent by the external network device.

The internal network device is used for receiving DNS response messages from the elimination device after going through elimination.

As can be seen from the above technical content, the present application has the following beneficial effects.

After determining that a source address in a target DNS response message is included in a dynamic white list, the embodiments of the present application can determine that an external network device that initiates the target DNS response message is not a fake source, but a real source. One type of DNS response attacks initiated from a real source is to frequently send DNS response messages having different domain names to attack an internal network device. Therefore, the present application sets up a historical domain name record, in which all domain names sent by the external network device are recorded.

When a target domain name in the target DNS response message is not included in the historical domain name record, this indicates that the external network device sends a DNS response message including this domain name for the first time. In this situation, the target DNS response message may be a DNS response attack initiated by the external network device using different domain names. In order to prevent the internal network device from an attack, the target DNS response message is discarded.

Since a normal external network device has an automatic resending mechanism, if a DNS response message sent by the normal external network device is discarded, the target DNS response message is resent after the external network device receives a DNS request message resent from an internal network device. Therefore, the present application does not affect sending of normal DNS response messages to an internal network device. However, an invasive external network device does not have this resending mechanism. Therefore, the present application can filter out DNS response messages that attack an internal device from a real source using different domain names, thus relieving the impact on services and networks caused by DNS response attacks.

### Brief Description of the Drawings

In order to understand the embodiments of the present application or technical schemes in existing technologies in a better manner, drawings that are needed for describing the embodiments or the existing technologies are briefly described herein. Apparently, the drawings described herein merely represent some embodiments of the present application. One of ordinary skill in art can obtain other drawings without making any creative effort based on these drawings.
FIG. 1 is a schematic structural diagram of a prevention system.
FIG. 2 is a flowchart of a network attack prevention method in accordance with the embodiments of the present application.
FIG. 3 is a flowchart of another network attack prevention method in accordance with the embodiments of the present application.
FIG. 4 is a flowchart of changing a dynamic white list in a network attack prevention method in accordance with the embodiments of the present application.
FIG. 5 is a flowchart of another network attack prevention method in accordance with the embodiments of the present application.
FIG. 6 is a schematic structural diagram of a network attack prevention method in accordance with the embodiments of the present application.
FIG. 7 is a schematic structural diagram of another network attack prevention method in accordance with the embodiments of the present application.
FIG. 8 is a schematic structural diagram of another network attack prevention method in accordance with the embodiments of the present application.

### Detailed Description

Technical solutions of the embodiments of the present application are described in a clear and comprehensive manner in conjunction with the drawings in the embodiments of the present application. Apparently, the described embodiments merely represent some and not all of the embodiments of the present application. Based on the embodiments in the present application, all other embodiments that are obtained by one of ordinary skill in the art without making any creative effort shall fall in the scope of protection of the present application.

In order to describe an application scenario of the present application in a better manner, FIG. 1, which is a prevention system of network attacks, is referenced. The system includes an external network device 100, a routing device 200, an internal network device 300, and an elimination device 400 that is deployed as a by-pass of the routing device 200.

The external network device 100 is used for sending DNS response messages directed to the internal network device 300 to the elimination device 400. The DNS response messages sent by the external network device may include invasive DNS response message(s) among normal DNS response messages. Therefore, the elimination device 400 is used for eliminating the invasive DNS response messages from the normal DNS response messages of the external network device, and transmitting the normal DNS response messages to the internal network device 300 after removing the invasive DNS response message(s).

Based on the prevention system of network attacks as shown in FIG.1, the present application provides a network attack prevention method. The present application only uses an external network device and an internal network device to which the external network device intends to access for making a detailed description. It can be understood that implementations of other external network devices and internal network devices are consistent with the method provided in the present application.

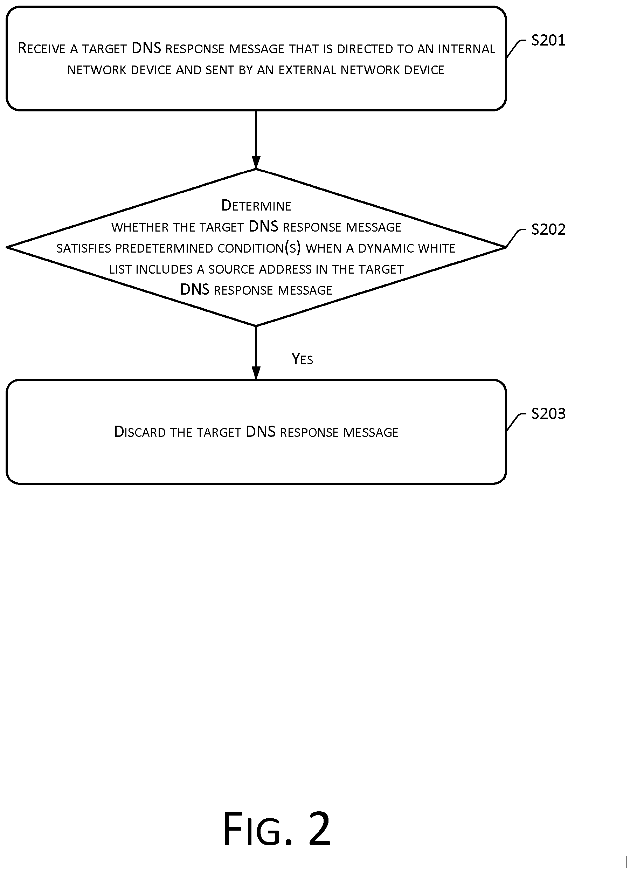

As shown in FIG. 2, the present application provides a network attack prevention method, which is applied in an elimination device. The method includes the following operations S201 - S203.

S201 receives a target DNS response message that is directed to an internal network device and sent by an external network device.

After receiving a command of sending a target DNS response message, an external network device sends the target DNS response message for an internal network device to an elimination device. The target DNS response message includes a source address (IP address) of the external network device that sends the target DNS response message, and a target domain name of the internal network device that needs to be accessed by the external network device. In response to receiving the target DNS response message, the elimination device can perform determination on the target DNS response message, to determine whether the target DNS response message is an invasive DNS response message.

S202 determines whether the target DNS response message satisfies predetermined condition(s) when a dynamic white list includes a source address in the target DNS response message.

A dynamic white list is set up in the elimination device. The dynamic white list stores IP addresses of real sources that are not invasive for the time being. IP addresses that are not invasive in the dynamic white list are temporary. When a certain IP address has changed into an invasive IP address according to a determination condition of the present application, this IP address is deleted from the dynamic white list. In other words, IP addresses in the dynamic white list of the present application are not fixed, and are dynamically changing. Therefore, it is called as a dynamic white list. After receiving the target DNS response message, the elimination device extracts a source address of the external network device from the target DNS response message, and determines with the dynamic white list includes the source address of the external network device.

If the dynamic white list does not include the source address of the external network device, a determination is made as to whether the external network device corresponding to the source address is a fake source using a source detection method. If the external network device is a fake source, the target DNS response message is an invasive DNS response message sent by the fake source, and therefore the target DNS response message is discarded.

If the dynamic white list includes the source address of the external network device, this indicates that the external network device is a real source. The target DNS response message is a DNS response message sent by a real source. Along with the development of attack technologies, a real source can also be used as a source of attack by an attacker. Therefore, a further determination needs to be made after determining that the external network device is a real source, to determine whether the target DNS response message is an invasive message.

Since a first way of initiating DNS response attacks from a real source is to frequently send DNS response messages having different domain names to attack an internal network device, the elimination device of the present application creates a historical domain name record for each IP address in the dynamic white list. A historical domain name record is used for recording a domain name including a DNS response message sent from each IP address. As can be seen, the elimination device in the present embodiment also has a historical domain name record corresponding to the external network device, which records domain names that appear in historical DNS response messages sent by the external network device.

In order to further determine whether the target DNS response message is an invasive message, the present embodiment sets up predetermined condition(s) in advance. The predetermined condition(s) include(s) at least a target domain in the target DNS response message being not included in a historical domain record, each historical domain name in the historical domain name record being extracted from historical DNS response messages sent by the external network device.

After determining that the dynamic white list includes the source address of the target DNS response message, a target domain name in the target DNS response message is extracted. A determination is further made as to whether a historical domain name record corresponding to the source address includes the target domain name, i.e., determining whether the target DNS response message satisfies the predetermined conditions.

S203 discards the target DNS response message if the target DNS response message satisfies the predetermined condition(s), or performs other processing if the target DNS response message does not satisfy the predetermined condition(s).

If the historical domain name record does not include the target domain name, this indicates that the external network device sends the DNS response message having the target domain name for the first time. In this situation, the target DNS response message may be a DNS response attack initiated by the external network device using a manner of different domain names. Therefore, the target domain name does not exist in the historical domain name record. In this situation, in order to prevent the internal network device from an attack, the target DNS response message is discarded. This process can be called as "first packet discarding mechanism".

It can be understood that the target DNS response message may be initiated by a normal external network device (the external network device accesses the internal network device corresponding to the target domain name for the first time). If the target DNS response message is assumed to be normal in the present application, the target DNS response message is discarded in the present operation. Accordingly, after the target DNS response message is discarded, the target domain name is stored in the historical domain name record, so that a target domain name in a target DNS response message that resent by the normal external network device according to a resending mechanism is included in the historical domain name record. In other words, the target domain name in the historical domain name record is hit, thereby ensuring that normal DNS messages are not discarded due to "first packet discarding mechanism".

Since normal external network devices have a resending mechanism, after the internal network device sends a DNS request to the external network device, the internal network device sends a DNS request message to an external network if no DNS response message is received from the external network device. Due to triggering of the DNS request message, the normal external network device will resend the target DNS response message. When the elimination device receives the target domain name again, the target DNS response message is not discarded again due to "first packet discarding mechanism because the historical domain
name record has included the target domain name, thus ensuring that normal DNS response messages are not affected.

Invasive external network devices do not have resending mechanism. Therefore, the present application can accurately eliminate DNS response messages that attack the internal network device by a real source using a manner of different domain names, thereby reducing the impact on services and networks caused by DNS response attacks.

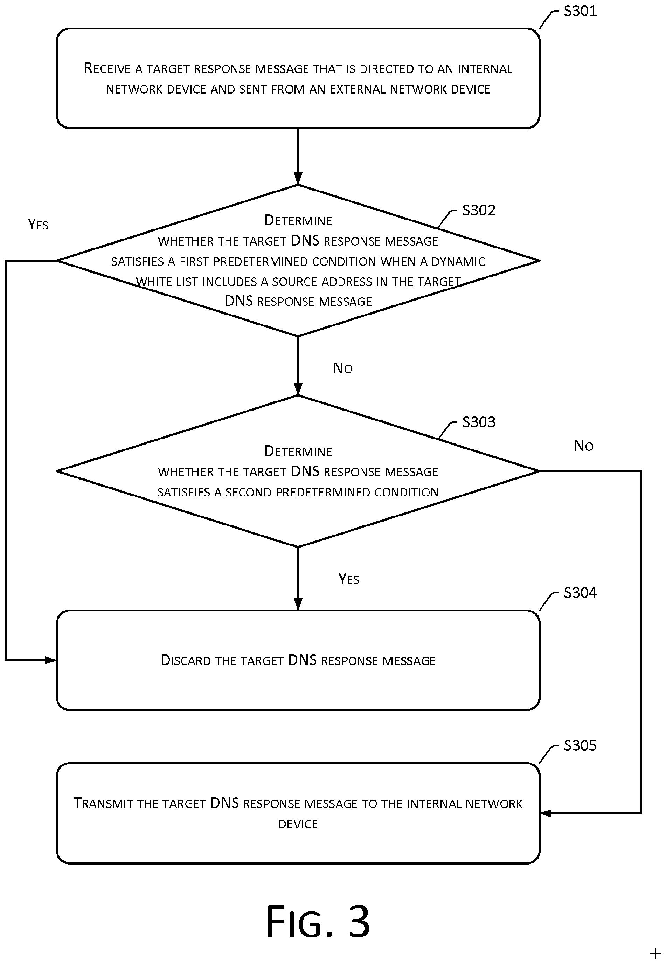

A second embodiment of a prevention method of network attacks that is provided by the present application is described as follows. As shown in FIG. 3, the method includes operations S301 - S305.

S301 receives a target response message that is directed to an internal network device and sent from an external network device.

S302 determines whether the target DNS response message satisfies a first predetermined condition when a dynamic white list includes a source address in the target DNS response message. The first predetermined condition includes a target domain name in the target DNS response message not being included in a historical domain name record. The method proceeds to S303 if the first predetermined condition is not satisfied, or proceeds to S304 if the first predetermined condition is satisfied.

A specific process of performing the present operation has been described in detail in the embodiment shown in FIG. 2, and is not repeatedly described herein.

S303 determines whether the target DNS response message satisfies a second predetermined condition. The second predetermined condition includes a time difference between a first sending time and a second sending time initiated by the external network device for the target domain name being less than a predetermined time difference, wherein the first sending time is a time of sending the target DNS response message, and the second sending time is a time of sending a most recent DNS response message that includes the target domain name prior to the first sending time. If the second predetermined condition is satisfied, S304 is entered. If the second predetermined condition is not satisfied, S305 is entered.

A second way of initiating DNS response attacks from a real source is to frequently send DNS response messages using a limited number of domain names or a same domain name. Since a frequency of sending DNS response messages from real sources is relatively high, a time difference between DNS response messages having a same domain name is very short in this situation. Therefore, the present application sets up a predetermined time difference, e.g., 1S. The predetermined time difference is a time difference that needs to have between two consecutive DNS response messages that have a same domain name and are sent by a normal external network device.

In an event that the historical domain name record includes the target domain name, predetermined conditions for determining the target DNS response message further include a time difference between a first sending time and a second sending time initiated by the external network device for the target domain name being less than a predetermined time difference.

When receiving the target DNS response message, the elimination device uses the current time as a sending time of the target DNS response message, i.e., the first sending time. The most recent sending time of a DNS response message that includes the target domain name and is recorded in the historical domain name record of the elimination device is the second sending time.

If a time difference between the first sending time and the second sending time is less than the predetermined time difference, this indicates that the external network device sends DNS response messages having the same domain name frequently. In other words, a frequency of sending DNS response messages having the same domain name by the external network device is exceedingly high. In this case, it is possible that the external network device attacks the internal network device through a manner of attack that frequently sends DNS response messages having a limited number of domain names or the same domain name. Therefore, the elimination device discards the target DNS response message to protect the internal network device from attacks.

S304 discards the target DNS response message.

S305 transmits the target DNS response message to the internal network device.

If the time difference between the first sending time and the second sending time is less than the predetermined time difference, this indicates that the target DNS response message is a DNS response message sent by a normal external network device for the moment. Therefore the DNS response message is transmitted to the internal network device.

IP addresses in the dynamic white list used by the embodiments of FIGS. 2 and 3 represent devices that are not invasive for the time being only. Therefore, an examination about whether an IP address in the dynamic white list has changed into an invasive device is needed on a regular basis to update the dynamic white list. Specifically, the following approach may be used.

A third way of initiating DNS response attacks from a real source in the dynamic white list can be sending DNS response messages having a relatively large number of domain names that are changing periodically, with a time difference between messages that attack a same domain name being greater than one second. In this case, the above two predetermined conditions cannot eliminate this type of invasive DNS response messages. Therefore, the following method is used for solving the third way of attacks.

Based on the embodiments as shown in FIGS. 2 and 3, the embodiments provided in the present application further include: for DNS response messages sent by the external network device, the elimination device searching the historical domain name record for a domain name in a DNS response message after receiving the DNS response message; and increasing a hit rate of the domain name by one if the domain name in the DNS response message is found in the historical domain name record (which indicates that the domain name is hit), wherein an initial value of a hit rate of each domain name is zero. Therefore, all domain names sent by external network devices, and a respective total hit rate of each domain name are recorded in the historical domain name record.

The present application sets up a predetermined hit rate, and this hit rate is at least three. It is because normal DNS response messages at most send two DNS response message having a same domain name under normal circumstances. After a hit rate of DNS response messages corresponding to a domain name exceeds the predetermined hit rate, this indicates that this domain name is frequently used for sending DNS response messages to the internal network device. Therefore, this domain name can be viewed as an attacked domain name for attacking the internal network device.

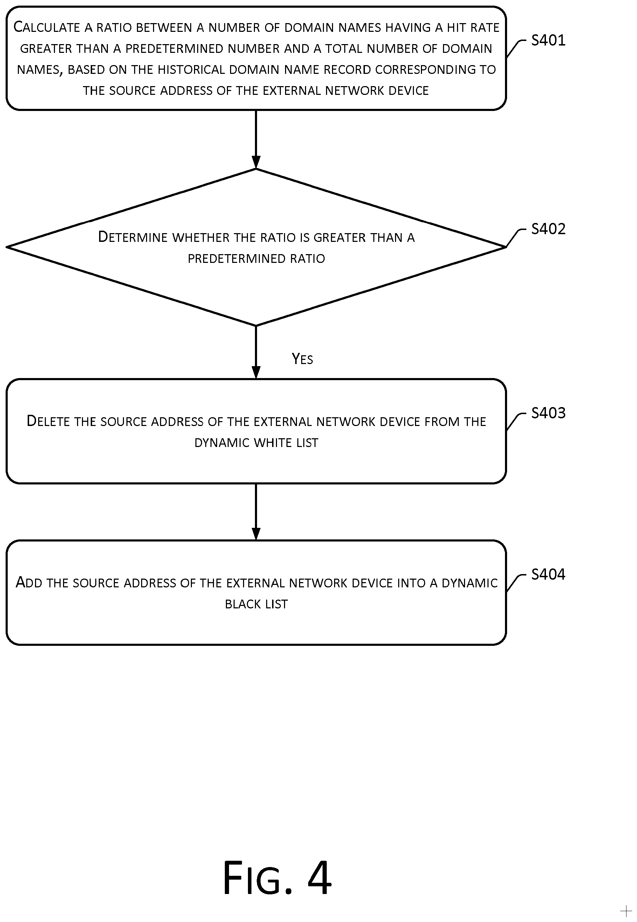

Based on the embodiments shown in FIGS. 2 and 3, the elimination device performs the following operations on a regular basis as shown in FIG. 4.

S401 calculates a ratio between a number of domain names having a hit rate greater than a predetermined number and a total number of domain names, based on the historical domain name record corresponding to the source address of the external network device, wherein the historical domain name record includes all domain names and a respective hit rate associated with each domain name in historical DNS response messages that are sent by the external network device.

A number (a first number) of domain names having a hit rate greater than a predetermined number is counted from the historical domain name record. A goal for doing this is to count a number of attacked domain names sent by the external network device. A total number (a second number) of domain names sent by the external network device is also counted. A ratio between the first number and the second number is calculated to determine a ratio between the attacked domain names and all the domain names sent by the external network device.

S402 determines whether the ratio is greater than a predetermined ratio, proceeds to S403 if affirmative, or performs other processing if not.

The present application can configure a predetermined ratio, such as 0.5, which is used for representing a proportion of attacked domain names among all domain names under normal circumstances.

S403 deletes the source address of the external network device from the dynamic white list.

When the calculated ratio is greater than the predetermined ratio at S401, this indicates that the external network device frequently sends DNS response messages that include attacked domain name(s). In other words, the external network device has changed into an invasive external network device. Therefore, the source address of the external network device is deleted from the dynamic white list.

S404 adds the source address of the external network device into a dynamic black list.

Source addresses of invasive external network devices in the dynamic white list are added into a dynamic black list, so that a DNS response message sent by the external network device is discarded when the external network device sends the DNS response message again, thus protecting the internal network device from being attacked.

The embodiment as shown in FIG. 4 uses a target domain name in a target DNS response message as a starting point, to determine whether the target DNS response message sent by an external network device is invasive, thereby achieving a goal of updating a dynamic white list. Other than a method of using domain names, the present application also provide a method of using throughput to update the dynamic white list.

Specifically, A DNS response message is sent from a source address of an external network device, and the source address is included in a dynamic white list. A throughput value of the DNS response message is added into a throughput value of historical DNS response message. An initial value of the throughput value of the historical DNS response messages is zero. A goal for doing this is to continuously compute a throughput value of DNS response messages that are sent by the external network device.

In this case, the predetermined conditions further include a total throughput value of a throughput value of the target DNS response message and a throughput value of historical DNS response message being greater than a predetermined throughput value, wherein the historical DNS response messages are all DNS response messages sent by the external network device before the target DNS response message is sent.

The present application sets up a predetermined throughput value, which is used for representing a total throughput value sent by the external network device within a time period. A throughput value of DNS response messages that are sent by the external network device within a time period being greater than a predetermined throughput value means that the external network device frequently sends DNS response message. In this case, this represents that the external network device in the dynamic white list has changed into an invasive external network device. Therefore, when the total throughput value is greater than the predetermined throughput value, the source address is deleted from the dynamic white list, and the source address is added into the dynamic black list.

With respect to the third approach of initiating DNS response messages from a real source (sending DNS response messages having many domain names that change periodically and a time difference between messages attacking a same domain name being greater than one second), even though the embodiments as shown in FIGS. 2 and 3 cannot eliminate thereof in time, a determination about whether an external network device is an invasive external network device can be made by regularly examining a total throughput value sent by the external network device or by using a hit rate associated with a domain name that is attacked being greater than a predetermined ratio. If the device is invasive, a source address of the
external network device is added into a dynamic black list, so that a DNS response message can be discarded immediately when the external network device sends the message again.

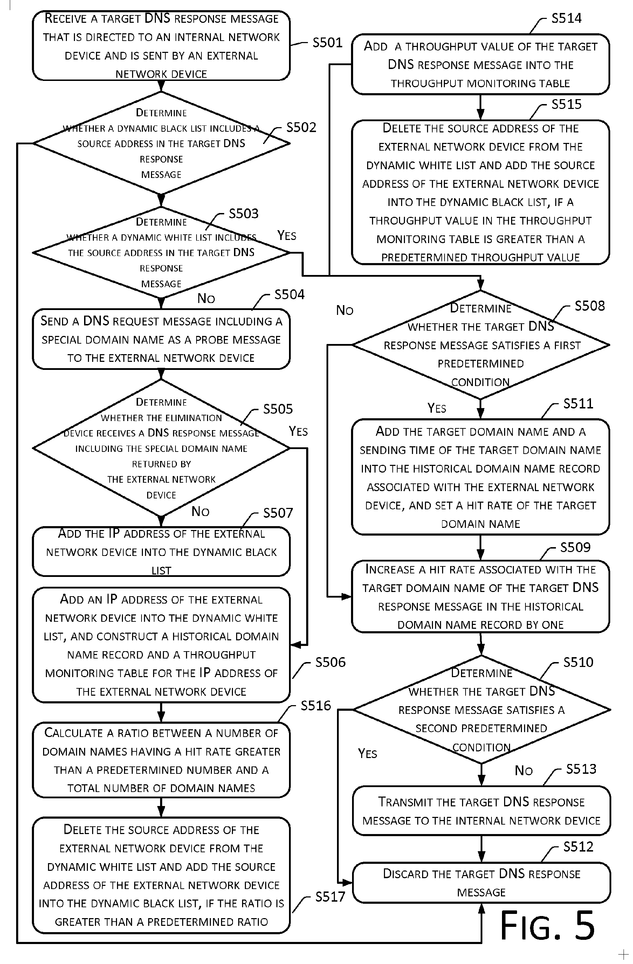

A third embodiment of a prevention method of network attacks provided by the present application is described hereinafter. As shown in FIG. 5, the method includes operations S501-S517.

S501 receives a target DNS response message that is directed to an internal network device and is sent by an external network device.

S502 determines whether a dynamic black list includes a source address in the target DNS response message, proceeds to S512 if affirmative, or proceeds to S503 if not.

After receiving a DNS response message sent from an external network device, an elimination device queries about whether an internal network device corresponding to a destination address is in a defensive status based on the destination address (IP address) of the message. If the internal network device is in a defensive status, the process of the present embodiment can be performed.

A dynamic black list stores source addresses of invasive external network devices. When the source address of the external network device is found in the dynamic black list, the target DNS response message is determined to be an invasive message. In this case, the target DNS response message is discarded.

S503 determines whether a dynamic white list includes the source address in the target DNS response message, proceeds to S508 and S514 if affirmative, or proceeds to S504 if not.

The elimination device constructs a DNS request message as a probe message for sending to the external network device. A domain name in the DNS request message can be constructed from quintuple information and domain name information in the target DNS response message through a hash method, and the constructed domain name is ensured to be a domain name that does not exist in a current network.

S505 determines whether the elimination device receives a DNS response message including the special domain name returned by the external network device, proceeds to S506 if affirmative, or proceeds to S507 if not.

After receiving a DNS response message that is sent by the external network device again, the elimination device examines whether a domain name in the message is the one that is constructed at S504. A normal external network device will add the domain name into a DNS response message that is generated based on the DNS request message if receiving the DNS request message. Therefore, if a DNS response message that is received again includes the special domain name, this indicates that the external network device is a normal external network device. Otherwise, this indicates that the external network device is an invasive external network device.

S506 adds an IP address of the external network device into the dynamic white list, and constructs a historical domain name record and a throughput monitoring table for the IP address of the external network device.

S507 adds the IP address of the external network device into the dynamic black list.

S508 determines whether the target DNS response message satisfies a first predetermined condition, the first predetermined condition being a target domain name in the target DNS response message being not included in a historical domain name record, proceeds to S509 if the first predetermined condition is not satisfied, or proceeds to S511 if the first predetermined condition is satisfied.

S509 increases a hit rate associated with the target domain name of the target DNS response message in the historical domain name record by one.

S510 determines whether the target DNS response message satisfies a second predetermined condition, the second predetermined condition being a time difference between a first sending time and a second sending time for accessing the target domain name initiated by the external network device being less than a predetermined time difference, proceeds to S512 if the second predetermined condition is not satisfied, or proceeds to S513 if the second predetermined condition is satisfied.

S511 adds the target domain name and a sending time of the target domain name into the historical domain name record associated with the external network device, and sets a hit rate of the target domain name as one.

S512 discards the target DNS response message.

S513 transmits the target DNS response message to the internal network device.

S514 adds a throughput value of the target DNS response message into the throughput monitoring table.

S515 deletes the source address of the external network device from the dynamic white list and adds the source address of the external network device into the dynamic black list, if a throughput value in the throughput monitoring table is greater than a predetermined throughput value.

S516 calculates a ratio between a number of domain names having a hit rate greater than a predetermined number and a total number of domain names.

S517 deletes the source address of the external network device from the dynamic white list and adds the source address of the external network device into the dynamic black list, if the ratio is greater than a predetermined ratio.

Using the embodiment as shown in FIG. 5, all types of DNS response attacks can be filtered.

The method using the dynamic white list at S503 can filter DNS response attacks from a fake source. The operation of S508 (domain name first packet discarding mechanism) can filter the first approach of DNS response attacks from a real source (randomly changing domain names in attacking messages). The determination at the operation of S510 can filter the second approach of DNS response attacks from a real source (a limited number of domain names or an unchanged domain name in attacking messages). The operations of S515 - S517 can filter the third approach of DNS response attacks from a real source (many periodically changing domain names in attacking messages and a time difference between messages attacking a same domain name being greater than one second).

Accordingly, the present application can filter all types of DNS response attacks, and thereby alleviate the impact on services and networks caused by the DNS response attacks.

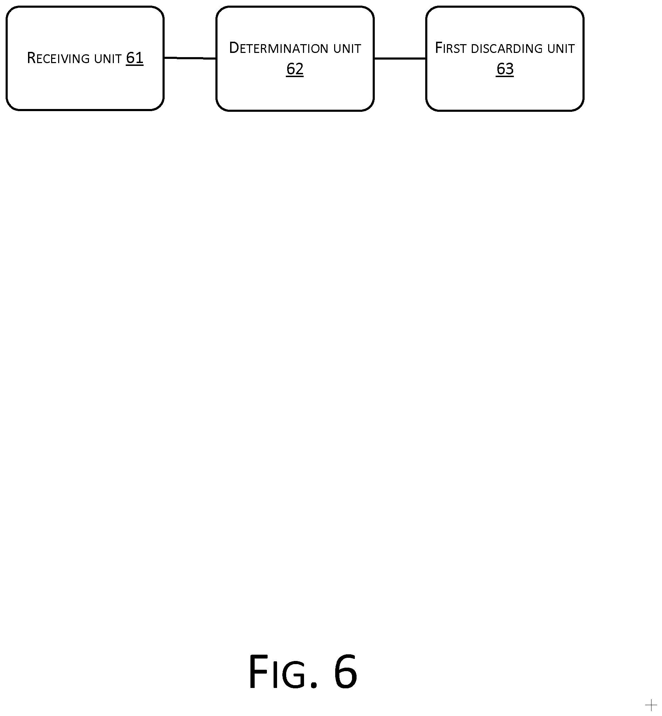

Corresponding to the prevention method of network attacks provided in the present application, the present application also provides a prevention apparatus of network attacks. As shown in FIG. 6, the apparatus includes a receiving unit 61 used for receiving a target DNS response message that is directed to an internal network device and sent from an external network device; a determination unit 62 used for determining whether the target DNS response message satisfies predetermined conditions under a circumstance that a dynamic white list includes a source address in the target DNS response message; and a first discarding unit 63 used for discarding the target DNS response message if the target DNS response message satisfies the predetermined conditions, wherein the predetermined conditions include at least a target domain in the target DNS response message being not included in a historical domain record, each historical domain name in the historical domain name record being extracted from historical DNS response messages sent by the external network device.

The predetermined condition further include a time difference between a first sending time and a second sending time initiated by the external network device for the target domain name is less than a predetermined time difference, wherein the first sending time is a time of sending the target DNS response message, and the second sending time is a time of sending a most recent DNS response message that includes the target domain name prior to the first sending time.

The predetermined conditions further include a total throughput value of a throughput value of the target DNS response message and a throughput value of historical DNS response messages being greater than a predetermined throughput value, wherein the historical DNS response messages are all DNS response messages sent by the external network device before the target DNS response message is sent.

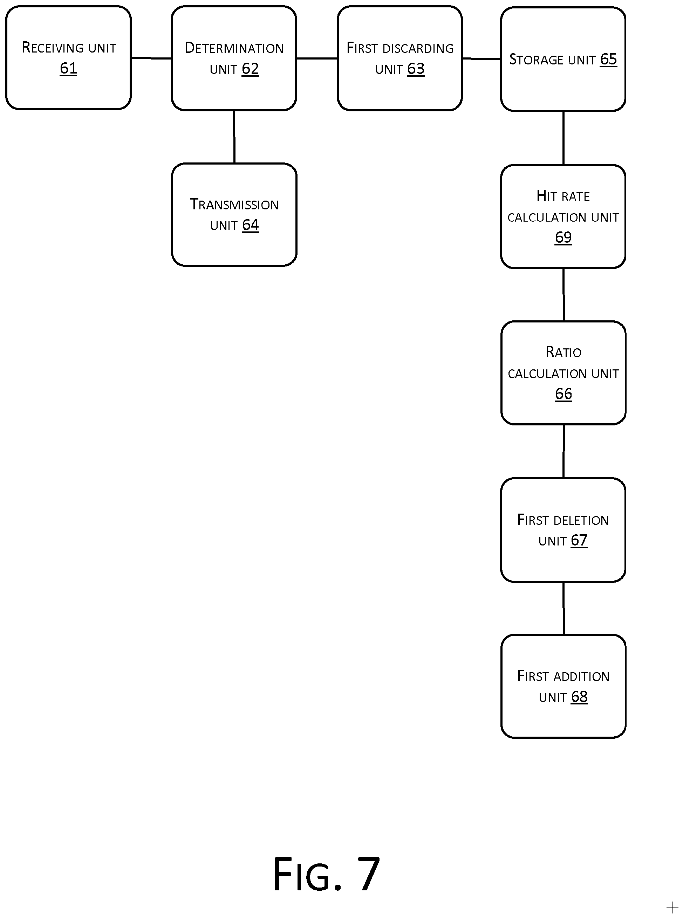

As shown in FIG. 7, the present application further provides a prevention apparatus of network attacks, which further includes a transmission unit 64 used for transmitting the target DNS response message to the internal network device when the time difference is not less than the predetermined time difference; a storage unit 65 used for storing the domain name and a sending time of the target DNS response message into the historical domain name record if the target domain name in the target DNS response message is not included in the historical domain name record; a ratio calculation unit 66 used for calculating a ratio between a number of domain names having a hit rate greater than a predetermined number and a total number of domain names, wherein the historical domain name record includes all domain names and respective hit rates of the domain names in historical DNS response messages sent by the external network device; a first deletion unit 67 used for deleting a source address of the external network device from the dynamic white list if the ratio is greater than a predetermined ratio; and an first addition unit 68 used for adding the source address of the external network device into a dynamic black list; and a hit rate calculation unit 69 used for finding a domain name in a DNS response message in the historical domain name record after receiving the DNS response message, and increasing a hit rate of the domain name by one, wherein an initial value of the hit rate of each domain name is zero.

As can be seen from the above content, the present application has the following beneficial effects.

After determining that a source address in a target DNS response message is included in a dynamic white list, the embodiments of the present application can determine whether an external network device that initiates the target DNS response message is not a fake source, but a real source. A type of initiating DNS response attacks from a real source is to frequently send DNS response messages including different domain names to attack an internal network device. Therefore, the present application sets up a historical domain name record, in which all domain names sent by the external network device are recorded.

When a target domain name in the target DNS response message is not included in the historical domain name record, this indicates that the external network device sends the DNS response message having the target domain name for the first time. In this case, the target DNS response message may be a DNS response attack initiated by the external network device using an approach of different domain names. In order to prevent the internal network device from attacks, the target DNS response message is discarded.

Since normal external network devices have an automatic resending mechanism, if a DNS response message sent by a normal external network device is discarded, the normal external network device will resend a new target DNS response message, and thus sending of normal DNS response messages to an internal network device is not affected. However, an invasive external network device does not have this resending mechanism. Therefore, the present application can filter out DNS response messages that attack an internal device from a real source using an approach of different domain names, thus alleviating the impact on services and networks caused by DNS response attacks.

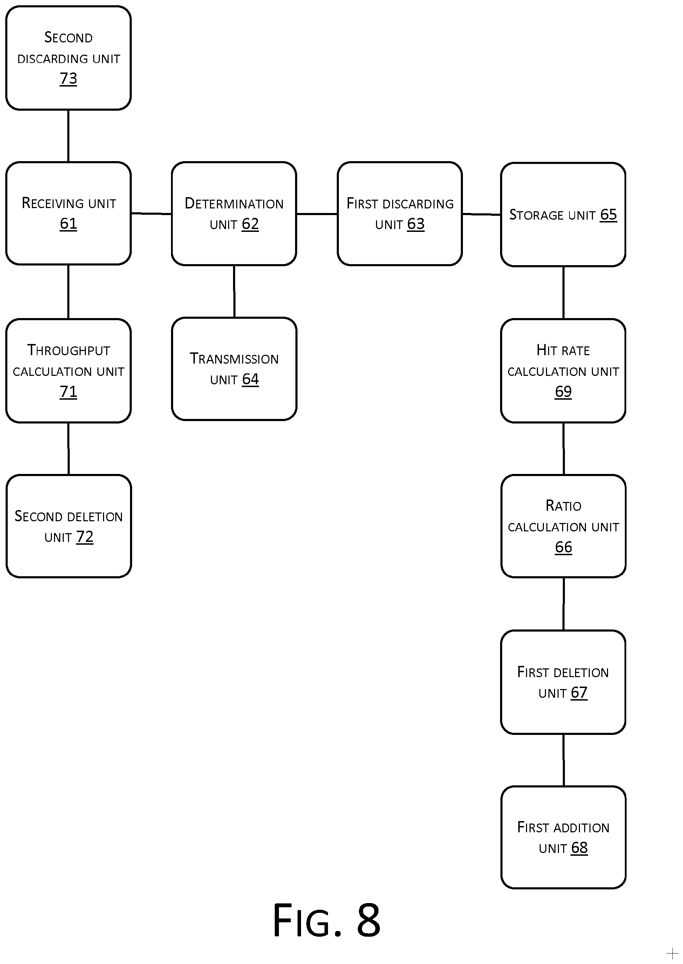

As shown in FIG. 8, the present application also provides a prevention apparatus of network attacks, which further includes a throughput calculation unit 71 used for adding a throughput value of a DNS response message to the throughput value of the historical DNS response messages after the DNS response message is sent from the source address of the external network device, an initial value of the throughput value of the historical DNS response messages is zero; a second deletion unit 72 used for deleting the source address from the dynamic white list when the total throughput value is greater than the predetermined throughput value; and a second addition unit 73 used for adding the source address into a dynamic black list; and a second discarding unit 74 used for discarding the target DNS response message when the dynamic black list includes the source address in the target DNS response message.

Referring to FIG. 1, the present application provides a prevention system of network attacks, which includes an external network device 100, a routing device 200, an elimination device 400, and an internal network device 300.

The external network device 100 is used for sending a target DNS response message that is directed to the internal network device 300 to the elimination device 400.

The elimination device 400 is used for receiving the target DNS response message that is directed to the internal network device from the external network device; determining whether the target DNS response message satisfies predetermined conditions when a dynamic white list includes a source address in the target DNS response message; and discarding the target DNS response message if the target DNS response message satisfies the predetermined conditions, wherein the predetermined conditions include at least a target domain in the target DNS response message being not included in a historical domain record, each historical domain name in the historical domain name record being extracted from historical DNS response messages sent by the external network device.

The internal network device 300 is used for receiving DNS response message(s) from the elimination device after elimination.

The present system has the following beneficial effects.

After determining that a source address in a target DNS response message is included in a dynamic white list, the embodiments of the present application can determine whether an external network device that initiates the target DNS response message is not a fake source, but a real source. A type of initiating DNS response attacks from a real source is to frequently send DNS response messages including different domain names to attack an internal network device. Therefore, the present application sets up a historical domain name record, in which all domain names sent by the external network device are recorded.

When a target domain name in the target DNS response message is not included in the historical domain name record, this indicates that the external network device sends the DNS response message having the target domain name for the first time. In this case, the target DNS response message may be a DNS response attack initiated by the external network device using an approach of different domain names. In order to prevent the internal network device from attacks, the target DNS response message is discarded.

Since normal external network devices have an automatic resending mechanism, if a DNS response message sent by a normal external network device is discarded, the normal external network device will resend a new target DNS response message, and thus sending of normal DNS response messages to an internal network device is not affected. However, an invasive external network device does not have this resending mechanism. Therefore, the present application can filter out DNS response messages that attack an internal device from a real source using an approach of different domain names, thus alleviating the impact on services and networks caused by DNS response attacks.

Functions described in the method embodiments can be stored in a storage media that is readable by a computing device if being implemented in a form of software functional unit(s) and used or sold as an independent product. Based on this understanding, the parts of the embodiments of the present application that make contribution to the existing technologies or the portions of the technical solutions can be implemented in a form of a software product. The software product is stored in a storage media, which includes instructions that cause a computing device (which may be a personal computer, a server, a mobile computing device, or a network device, etc.) to execute all or some of the method described in each embodiment of the present application. The storage media includes various types of media that is capable of storing program modes, such as a U disk, a movable hard drive, a read-only memory (ROM), a random access memory (RAM), a magnetic disk, or an optical disk, etc.

The embodiments of the present application are described in a progressive manner. Differences between emphases of the embodiments can be referenced to the same or similar portions of the embodiments.

The above description of the disclosed embodiments enables one skilled in the art to implement and use the present application. A number of different modifications to these embodiments are apparent to the one skilled in the art. General principles defined in the present specification can be implemented in other embodiments. Therefore, the present application is not limited to these embodiments described in the present specification, but rather is fulfilled in the broadest scope that is consistent with the appended claims.

## Claims

1. A method comprising:
receiving (S301) a target DNS response message that is directed to an internal network device (300) and sent from an external network device (100), the target DNS response message including a source address of the external network device (100);
determining (S302) whether the target DNS response message satisfies predetermined conditions under a circumstance that a dynamic white list includes the source address included in the target DNS response message; and
discarding (S304) the target DNS response message if the target DNS response message satisfies the predetermined conditions, wherein the predetermined conditions include at least a target domain in the target DNS response message not being included in a historical domain name record, each historical domain name in the historical domain name record being extracted from historical DNS response messages sent by the external network device (100).

2. The method of claim 1, wherein the predetermined conditions further comprise a time difference between a first sending time and a second sending time initiated by the external network device for the target domain name being less than a predetermined time difference, wherein the first sending time is a time of sending the target DNS response message, and the second sending time is a time of sending a most recent DNS response message that includes the target domain name prior to the first sending time.

3. The method of claim 2, further comprising transmitting (S305) the target DNS response message to the internal network device (300) under a circumstance that the time difference is not less than the predetermined time difference.

4. The method of any preceding claim, further comprising storing the domain name and a sending time of the target DNS response message into the historical domain name record if the target domain name in the target DNS response message is not included in the historical domain name record.

5. The method of any preceding claim, wherein the predetermined conditions further comprise a total throughput value of a throughput value of the target DNS response message and a throughput value of the historical DNS response messages being greater than a predetermined throughput value, wherein the historical DNS response messages are all DNS response messages sent by the external network device before the target DNS response message is sent.

6. The method of any preceding claim, further comprising discarding the target DNS response message when a dynamic black list includes the source address in the target DNS response message.

7. An apparatus comprising:
one or more processors;
memory;
a receiving unit (61) stored in the memory and executable by the one or more processors to receive a target DNS response message that is directed to an internal network device (300) and sent from an external network device (100), the target DNS response message including a source address of the external network device (100);
a determination unit (62) configured
for determining whether the target DNS response message satisfies predetermined conditions under a circumstance that a dynamic white list includes the source address included in the target DNS response message; and
a first discarding unit (63) stored in the memory and executable by the one or more processors to discard the target DNS response message if the target DNS response message satisfies the predetermined conditions, wherein the predetermined conditions include at least a target domain in the target DNS response message not being included in a historical domain name record, each historical domain name in the historical domain name record being extracted from historical DNS response messages sent by the external network device (100).

8. The apparatus of claim 7, wherein the predetermined conditions further comprise a time difference between a first sending time and a second sending time initiated by the external network device for the target domain name being less than a predetermined time difference, wherein the first sending time is a time of sending the target DNS response message, and the second sending time is a time of sending a most recent DNS response message that includes the target domain name prior to the first sending time, and wherein the apparatus further comprises a transmission unit used for transmitting the target DNS response message to the internal network device when the time difference is not less than the predetermined time difference.

9. The apparatus of claim 7 or claim 8, further comprising a storage unit (65) configured for storing the domain name and a sending time of the target DNS response message into the historical domain name record if the target domain name in the target DNS response message is not included in the historical domain name record.

10. The apparatus of any one of claims 7 to 9, further comprising:
a ratio calculation unit (66) configured
for calculating a ratio between a number of domain names having a hit rate greater than a predetermined number and a total number of domain names, wherein the historical domain name record includes all domain names and respective hit rates of the domain names in historical DNS response messages sent by the external network device, and the predetermined number is not less than a natural number of three;
a first deletion unit (67) configured for deleting a source address of the external network device from the dynamic white list if the ratio is greater than a predetermined ratio; and
a first addition unit (68) configured for adding the source address of the external network device into a dynamic black list.

11. The apparatus of claim 10, further comprising a hit rate calculation unit (69) configured for finding a domain name in a DNS response message in the historical domain name record after receiving the DNS response message, and increasing a hit rate of the domain name by one, wherein an initial value of the hit rate of each domain name is zero.

12. The apparatus of any one of claims 7 to 11, wherein the predetermined conditions further comprise a total throughput value of a throughput value of the target DNS response message and a throughput value of historical DNS response messages being greater than a predetermined throughput value, wherein the historical DNS response messages are all DNS response messages sent by the external network device before the target DNS response message is sent.

13. The apparatus of claim 12, further comprising:
a second deletion unit (72) configured
for deleting the source address from the dynamic white list when the total throughput value is greater than the predetermined throughput value; and
a second addition unit used for adding the source address into a dynamic black list.

14. The apparatus of any one of claims 7 to 13, further comprising a second discarding unit (73) configured for discarding the target DNS response message when the dynamic black list includes the source address in the target DNS response message.

15. One or more computer-readable media storing executable instructions that, when executed by one or more processors, cause the one or more processors to perform acts comprising:
receiving (S301) a target DNS response message that is directed to an internal network device (300) and sent from an external network device (100), the target DNS response message including a source address of the external network device (100);
determining (S302) whether the target DNS response message satisfies predetermined conditions under a circumstance that a dynamic white list includes the source address included in the target DNS response message; and
discarding (S304) the target DNS response message if the target DNS response message satisfies the predetermined conditions, wherein the predetermined conditions include at least a target domain in the target DNS response message not being included in a historical domain name record, each domain name in the historical domain name record being extracted from DNS response messages sent by the external network device (100).

## Patentansprüche

1. Verfahren, umfassend:
Empfangen (S301) einer Ziel-DNS-Antwortnachricht, die an eine interne Netzwerkvorrichtung (300) gerichtet ist und von einer externen Netzwerkvorrichtung (100) gesendet wurde, wobei die Ziel-DNS-Antwortnachricht eine Quelladresse der externen Netzwerkvorrichtung (100) beinhaltet;
Bestimmen (S302), ob die Ziel-DNS-Antwortnachricht vorgegebene Bedingungen erfüllt, unter einem Umstand, dass eine dynamische weiße Liste die Quelladresse beinhaltet, die in der Ziel-DNS-Antwortnachricht beinhaltet ist; und
Verwerfen (S304) der Ziel-DNS-Antwortnachricht, falls die Ziel-DNS-Antwortnachricht die vorgegebenen Bedingungen erfüllt, wobei die vorgegebenen Bedingungen beinhalten, dass mindestens eine Zieldomäne in der Ziel-DNS-Antwortnachricht nicht in einer historischen Domänennamenaufzeichnung beinhaltet ist, wobei jeder historische Domänenname in der historischen Domänennamenaufzeichnung aus historischen DNS-Antwortnachrichten extrahiert wird, die von der externen Netzwerkvorrichtung (100) gesendet wurden.

2. Verfahren nach Anspruch 1, wobei die vorgegebenen Bedingungen weiter umfassen, dass eine Zeitdifferenz zwischen einer ersten Sendezeit und einer zweiten Sendezeit, die von der externen Netzwerkvorrichtung für den Zieldomänennamen angestoßen wurden, geringer als eine vorgegebene Zeitdifferenz ist, wobei die erste Sendezeit eine Zeit vom Senden der Ziel-DNS-Antwortnachricht ist und die zweite Sendezeit eine Zeit vom Senden einer aktuellsten DNS-Antwortnachricht, die den Zieldomänennamen vor der ersten Sendezeit beinhaltet hat, ist.

3. Verfahren nach Anspruch 2, weiter umfassend Übertragen (S305) der Ziel-DNS-Antwortnachricht an die interne Netzwerkvorrichtung (300) unter einem Umstand, dass die Zeitdifferenz nicht geringer als die vorgegebene Zeitdifferenz ist.

4. Verfahren nach einem vorstehenden Anspruch, weiter umfassend Speichern des Domänennamens und einer Sendezeit der Ziel-DNS-Antwortnachricht in die historische Domänennamenaufzeichnung, falls der Zieldomänenname in der Ziel-DNS-Antwortnachricht nicht in der historischen Domänennamenaufzeichnung beinhaltet ist.

5. Verfahren nach einem vorstehenden Anspruch, wobei die vorgegebenen Bedingungen weiter umfassen, dass ein Gesamtdurchsatzwert eines Durchsatzwerts der Ziel-DNS-Antwortnachricht und eines Durchsatzwerts der historischen DNS-Antwortnachrichten größer als ein vorgegebener Durchsatzwert ist, wobei die historischen DNS-Antwortnachrichten alle DNS-Antwortnachrichten sind, die von der externen Netzwerkvorrichtung gesendet wurden, bevor die DNS-Antwortnachricht gesendet wurde.

6. Verfahren nach einem vorstehenden Anspruch, weiter umfassend Verwerfen der Ziel-DNS-Antwortnachricht, wenn eine dynamische schwarze Liste die Quelladresse in der Ziel-DNS-Antwortnachricht beinhaltet.

7. Einrichtung, umfassend:
einen oder mehrere Prozessoren;
Speicher;
eine Empfangseinheit (61), die in dem Speicher gespeichert ist und von dem einen oder den mehreren Prozessoren ausführbar ist, um eine Ziel-DNS-Antwortnachricht zu empfangen, die an eine interne Netzwerkvorrichtung (300) gerichtet ist und von einer externen Netzwerkvorrichtung (100) gesendet wurde, wobei die Ziel-DNS-Antwortnachricht eine Quelladresse der externen Netzwerkvorrichtung (100) beinhaltet;
eine Bestimmungseinheit (62), die konfiguriert ist zu bestimmen, ob die Ziel-DNS-Antwortnachricht vorgegebene Bedingungen erfüllt, unter einem Umstand, dass eine dynamische weiße Liste die Quelladresse beinhaltet, die in der Ziel-DNS-Antwortnachricht beinhaltet ist; und
eine erste Verwerfeinheit (63), die in dem Speicher gespeichert ist und von dem einen oder den mehreren Prozessoren ausführbar ist, um die Ziel-DNS-Antwortnachricht zu verwerfen, falls die Ziel-DNS-Antwortnachricht die vorgegebenen Bedingungen erfüllt, wobei die vorgegebenen Bedingungen mindestens eine Zieldomäne in der Ziel-DNS-Antwortnachricht beinhalten, die nicht in einer historischen Domänennamenaufzeichnung beinhaltet ist, wobei jeder historische Domänenname in der historischen Domänennamenaufzeichnung aus historischen DNS-Antwortnachrichten extrahiert wird, die von der externen Netzwerkvorrichtung (100) gesendet wurden.

8. Einrichtung nach Anspruch 7, wobei die vorgegebenen Bedingungen weiter umfassen, dass eine Zeitdifferenz zwischen einer ersten Sendezeit und einer zweiten Sendezeit, die von der externen Netzwerkvorrichtung für den Zieldomänennamen angestoßen wurden, geringer als eine vorgegebene Zeitdifferenz ist, wobei die erste Sendezeit eine Zeit vom Senden der Ziel-DNS-Antwortnachricht ist und die zweite Sendezeit eine Zeit vom Senden einer aktuellsten DNS-Antwortnachricht, die den Zieldomänennamen vor der ersten Sendezeit beinhaltet hat, ist, und wobei die Einrichtung weiter eine Übertragungseinheit umfasst, die zum Übertragen der Ziel-DNS-Antwortnachricht an die interne Netzwerkvorrichtung verwendet wird, wenn die Zeitdifferenz nicht geringer als die vorgegebene Zeitdifferenz ist.

9. Einrichtung nach Anspruch 7 oder Anspruch 8, weiter umfassend eine Speichereinheit (65), die konfiguriert ist, den Domänennamen und eine Sendezeit der Ziel-DNS-Antwortnachricht in die historische Domänennamenaufzeichnung zu speichern, falls der Zieldomänenname in der DNS-Antwortnachricht nicht in der historischen Domänennamenaufzeichnung beinhaltet ist.

10. Einrichtung nach einem der Ansprüche 7 bis 9, weiter umfassend:
eine Verhältnisberechnungseinheit (66), die konfiguriert ist, ein Verhältnis zwischen einer Zahl von Domänennamen, die eine Trefferrate größer als eine vorgegebene Zahl aufweisen, und einer Gesamtzahl von Domänennamen zu berechnen, wobei die historische Domänennamenaufzeichnung alle Domänennamen und jeweilige Trefferraten der Domänennamen in historischen DNS-Antwortnachrichten, die von der externen Netzwerkvorrichtung gesendet wurden, beinhaltet und die vorgegebene Zahl nicht geringer als eine natürliche Zahl Drei ist;
eine erste Löschungseinheit (67), die konfiguriert ist, eine Quelladresse der externen Netzwerkvorrichtung aus der dynamischen weißen Liste zu löschen, falls das Verhältnis größer als ein vorgegebenes Verhältnis ist; und
eine erste Hinzufügeeinheit (68), die konfiguriert ist, die Quelladresse der externen Netzwerkvorrichtung in eine dynamische schwarze Liste hinzuzufügen.

11. Einrichtung nach Anspruch 10, weiter umfassend eine Trefferratenberechnungseinheit (69), die konfiguriert ist, einen Domänennamen in einer DNS-Antwortnachricht in der historischen Domänennamenaufzeichnung zu finden, nachdem die DNS-Antwortnachricht empfangen wurde, und eine Trefferrate des Domänennamens um eins zu erhöhen, wobei ein Anfangswert der Trefferrate jedes Domänennamens null ist.

12. Einrichtung nach einem der Ansprüche 7 bis 11, wobei die vorgegebenen Bedingungen weiter umfassen, dass ein Gesamtdurchsatzwert eines Durchsatzwerts der Ziel-DNS-Antwortnachricht und eines Durchsatzwerts historischer DNS-Antwortnachrichten größer als ein vorgegebener Durchsatzwert ist, wobei die historischen DNS-Antwortnachrichten alle DNS-Antwortnachrichten sind, die von der externen Netzwerkvorrichtung gesendet wurden, bevor die DNS-Antwortnachricht gesendet wurde.

13. Einrichtung nach Anspruch 12, weiter umfassend:
eine zweite Löschungseinheit (72), die konfiguriert ist, die Quelladresse von der dynamischen weißen Liste zu löschen, wenn der Gesamtdurchsatzwert größer als der vorgegebene Durchsatzwert ist; und
eine zweite Hinzufügeeinheit, die zum Hinzufügen der Quelladresse in eine dynamische schwarze Liste verwendet wird.

14. Einrichtung nach einem der Ansprüche 7 bis 13, weiter umfassend eine zweite Verwerfeinheit (73), die konfiguriert ist, die Ziel-DNS-Antwortnachricht zu verwerfen, wenn die dynamische schwarze Liste die Quelladresse in der Ziel-DNS-Antwortnachricht beinhaltet.

15. Ein oder mehrere computerlesbare Medien, die ausführbare Anweisungen speichern, die, wenn von einem oder mehreren Prozessoren ausgeführt, den einen oder die mehreren Prozessoren veranlassen, Handlungen durchzuführen, umfassend:
Empfangen (S301) einer Ziel-DNS-Antwortnachricht, die an eine interne Netzwerkvorrichtung (300) gerichtet ist und von einer externen Netzwerkvorrichtung (100) gesendet wurde, wobei die Ziel-DNS-Antwortnachricht eine Quelladresse der externen Netzwerkvorrichtung (100) beinhaltet;
Bestimmen (S302), ob die Ziel-DNS-Antwortnachricht vorgegebene Bedingungen erfüllt, unter einem Umstand, dass eine dynamische weiße Liste die Quelladresse beinhaltet, die in der Ziel-DNS-Antwortnachricht beinhaltet ist; und
Verwerfen (S304) der Ziel-DNS-Antwortnachricht, falls die Ziel-DNS-Antwortnachricht die vorgegebenen Bedingungen erfüllt, wobei die vorgegebenen Bedingungen mindestens beinhalten, dass eine Zieldomäne in der Ziel-DNS-Antwortnachricht nicht in einer historischen Domänennamenaufzeichnung beinhaltet ist, wobei jeder Domänenname in der historischen Domänennamenaufzeichnung aus DNS-Antwortnachrichten extrahiert wird, die von der externen Netzwerkvorrichtung (100) gesendet wurden.

## Revendications

1. Procédé comprenant les étapes consistant à :
recevoir (S301) un message de réponse DNS cible qui est dirigé vers un dispositif de réseau interne (300) et envoyé depuis un dispositif de réseau externe (100), le message de réponse DNS cible incluant une adresse source du dispositif de réseau externe (100) ;
déterminer (S302) si le message de réponse DNS cible satisfait à des conditions prédéterminées dans le cas où une liste blanche dynamique inclut l'adresse source incluse dans le message de réponse DNS cible ; et
rejeter (S304) le message de réponse DNS cible si le message de réponse DNS cible satisfait aux conditions prédéterminées, dans lequel les conditions prédéterminées incluent au moins un domaine cible dans le message de réponse DNS cible n'étant pas inclus dans un enregistrement de nom de domaine historique, chaque nom de domaine historique dans l'enregistrement de nom de domaine historique étant extrait de messages de réponse DNS historiques envoyés par le dispositif de réseau externe (100).

2. Procédé selon la revendication 1, dans lequel les conditions prédéterminées comprennent en outre une différence temporelle entre un premier moment d'envoi et un second moment d'envoi initiés par le dispositif de réseau externe pour le nom de domaine cible étant inférieure à une différence temporelle prédéterminée, dans lequel le premier moment d'envoi est un moment d'envoi du message de réponse DNS cible, et le second moment d'envoi est un moment d'envoi d'un message de réponse DNS le plus récent qui inclut le nom de domaine cible avant le premier moment d'envoi.

3. Procédé selon la revendication 2, comprenant en outre l'étape consistant à transmettre (S305) le message de réponse DNS cible au dispositif de réseau interne (300) dans le cas où la différence temporelle n'est pas inférieure à la différence temporelle prédéterminée.

4. Procédé selon une quelconque revendication précédente, comprenant en outre l'étape consistant à stocker le nom de domaine et un moment d'envoi du message de réponse DNS cible dans l'enregistrement de nom de domaine historique si le nom de domaine cible dans le message de réponse DNS cible n'est pas inclus dans l'enregistrement de nom de domaine historique.

5. Procédé selon une quelconque revendication précédente, dans lequel les conditions prédéterminées comprennent en outre une valeur de débit totale d'une valeur de débit du message de réponse DNS cible et d'une valeur de débit des messages de réponse DNS historiques étant supérieure à une valeur de débit prédéterminée, dans lequel les messages de réponse DNS historiques sont tous les messages de réponse DNS envoyés par le dispositif de réseau externe avant que le message de réponse DNS cible soit envoyé.

6. Procédé selon une quelconque revendication précédente, comprenant en outre l'étape consistant à rejeter le message de réponse DNS cible lorsqu'une liste noire dynamique inclut l'adresse source dans le message de réponse DNS cible.

7. Appareil comprenant :
un ou plusieurs processeurs ;
une mémoire ;
une unité de réception (61) stockée dans la mémoire et exécutable par les un ou plusieurs processeurs pour recevoir un message de réponse DNS cible qui est dirigé vers un dispositif de réseau interne (300) et envoyé depuis un dispositif de réseau externe (100), le message de réponse DNS cible incluant une adresse source du dispositif de réseau externe (100) ;
une unité de détermination (62) configurée pour déterminer si le message de réponse DNS cible satisfait à des conditions prédéterminées dans le cas où une liste blanche dynamique inclut l'adresse source incluse dans le message de réponse DNS cible ; et
une première unité de rejet (63) stockée dans la mémoire et exécutable par les un ou plusieurs processeurs pour rejeter le message de réponse DNS cible si le message de réponse DNS cible satisfait aux conditions prédéterminées, dans lequel les conditions prédéterminées incluent au moins un domaine cible dans le message de réponse DNS cible n'étant pas inclus dans un enregistrement de nom de domaine historique, chaque nom de domaine historique dans l'enregistrement de nom de domaine historique étant extrait de messages de réponse DNS historiques envoyés par le dispositif de réseau externe (100).

8. Appareil selon la revendication 7, dans lequel les conditions prédéterminées comprennent en outre une différence temporelle entre un premier moment d'envoi et un second moment d'envoi initiés par le dispositif de réseau externe pour le nom de domaine cible étant inférieure à une différence temporelle prédéterminée, dans lequel le premier moment d'envoi est un moment d'envoi du message de réponse DNS cible, et le second moment d'envoi est un moment d'envoi d'un message de réponse DNS le plus récent qui inclut le nom de domaine cible avant le premier moment d'envoi, et dans lequel l'appareil comprend en outre une unité de transmission utilisée pour transmettre le message de réponse DNS cible au dispositif de réseau interne lorsque la différence temporelle n'est pas inférieure à la différence temporelle prédéterminée.

9. Appareil selon la revendication 7 ou la revendication 8, comprenant en outre une unité de stockage (65) configurée pour stocker le nom de domaine et un moment d'envoi du message de réponse DNS cible dans l'enregistrement de nom de domaine historique si le nom de domaine cible dans le message de réponse DNS cible n'est pas inclus dans l'enregistrement de nom de domaine historique.

10. Appareil selon l'une quelconque des revendications 7 à 9, comprenant en outre :
une unité de calcul de rapport (66) configurée pour calculer un rapport entre un nombre de noms de domaine présentant un taux de réussite supérieur à un nombre prédéterminé et un nombre total de noms de domaine, dans lequel l'enregistrement de nom de domaine historique inclut tous les noms de domaine et les taux de réussite respectifs des noms de domaine dans des messages de réponse DNS historiques envoyés par le dispositif de réseau externe, et le nombre prédéterminé n'est pas inférieur à un nombre naturel de trois ;
une première unité de suppression (67) configurée pour supprimer une adresse source du dispositif de réseau externe de la liste blanche dynamique si le rapport est supérieur à un rapport prédéterminé ; et
une première unité d'addition (68) configurée pour ajouter l'adresse source du dispositif de réseau externe dans une liste noire dynamique.

11. Appareil selon la revendication 10, comprenant en outre une unité de calcul de taux de réussite (69) configurée pour trouver un nom de domaine dans un message de réponse DNS dans l'enregistrement de nom de domaine historique après avoir reçu le message de réponse DNS, et augmenter un taux de réussite du nom de domaine d'un, dans lequel une valeur initiale du taux de réussite de chaque nom de domaine est zéro.

12. Appareil selon l'une quelconque des revendications 7 à 11, dans lequel les conditions prédéterminées comprennent en outre une valeur de débit totale d'une valeur de débit du message de réponse DNS cible et d'une valeur de débit de messages de réponse DNS historiques étant supérieure à une valeur de débit prédéterminée, dans lequel les messages de réponse DNS historiques sont tous les messages de réponse DNS envoyés par le dispositif de réseau externe avant que le message de réponse DNS cible soit envoyé.

13. Appareil selon la revendication 12, comprenant en outre :
une seconde unité de suppression (72) configurée pour supprimer l'adresse source de la liste blanche dynamique lorsque la valeur de débit totale est supérieure à la valeur de débit prédéterminée ; et
une seconde unité d'addition utilisée pour ajouter l'adresse source dans une liste noire dynamique.

14. Appareil selon l'une quelconque des revendications 7 à 13, comprenant en outre une seconde unité de rejet (73) configurée pour rejeter le message de réponse DNS cible lorsque la liste noire dynamique inclut l'adresse source dans le message de réponse DNS cible.

15. Support(s) lisible(s) par ordinateur stockant des instructions exécutables qui, lorsqu'elles sont exécutées par un ou plusieurs processeurs, amènent les un ou plusieurs processeurs à effectuer des actions comprenant :
la réception (S301) d'un message de réponse DNS cible qui est dirigé vers un dispositif de réseau interne (300) et envoyé depuis un dispositif de réseau externe (100), le message de réponse DNS cible incluant une adresse source du dispositif de réseau externe (100) ;
la détermination (S302) de si le message de réponse DNS cible satisfait à des conditions prédéterminées dans le cas où une liste blanche dynamique inclut l'adresse source incluse dans le message de réponse DNS cible ; et
le rejet (S304) du message de réponse DNS cible si le message de réponse DNS cible satisfait aux conditions prédéterminées, dans lequel les conditions prédéterminées incluent au moins un domaine cible dans le message de réponse DNS cible n'étant pas inclus dans un enregistrement de nom de domaine historique, chaque nom de domaine dans l'enregistrement de nom de domaine historique étant extrait de messages de réponse DNS envoyés par le dispositif de réseau externe (100).
